Europäisches Patentamt

**European Patent Office**

Office européen des brevets

(19)

(11) Publication number: **0 236 588 B1**

# EUROPEAN PATENT SPECIFICATION

(12)

(45) Date of publication of patent specification: **06.11.91**

(21) Application number: **86201834.8**

(22) Date of filing: **25.02.83**

(51) Int. Cl.⁵: **G11B 15/43**, G11B 15/467, G11B 15/02

(60) Publication number of the earlier application in accordance with Art.76 EPC: **0 091 186**

(54) Reel servo system in a recording and/or reproducing apparatus.

(30) Priority: **02.04.82 US 364652**

(43) Date of publication of application:
**16.09.87 Bulletin 87/38**

(45) Publication of the grant of the patent:
**06.11.91 Bulletin 91/45**

(84) Designated Contracting States:
**CH DE FR GB LI NL**

(56) References cited:
**GB-A- 1 602 446**

**IBE INTERNATIONAL BROADCAST ENGI-NEER, vol. 12, no. 176, March 1981, pages 18-26, Eton, Berks, GB; L.V.HEDLUND: "The TR-800 VTR-a computer-based total system design"**

**PROCEEDINGS OF THE CONFERENCE ON VIDEO AND DATA RECORDING, Hampshire, 24th-27th July 1979, pages 61-76, Institution of Electronic and Radio Engineers, London,**

**GB; D.S.CUTLER: "Microprocessor - controlled servo system for 0,5 inch magnetic tape transport"**

**PATENT ABSTRACTS OF JAPAN, vol. 7, no. 282 (P-243)[1427], 16th December 1983; & JP-A-58 158 068 (MATSUSHITA DENKI SANGYO K.K.) 20-09-1983**

(73) Proprietor: **AMPEX CORPORATION**
**401 Broadway M.S. 3-35**
**Redwood City California 94063-3199(US)**

(72) Inventor: **Louth, Kenneth**
**353 Bellevue Court**
**Los Altos California(US)**

(74) Representative: **Horton, Andrew Robert Grant et al**
**BOWLES HORTON Felden House Dower Mews High Street**
**Berkhamsted Hertfordshire HP4 2BL(GB)**

## Description

The present invention generally relates to servo systems for recording and reproducing apparatus and, more particularly, to a microprocessor controlled reel servo for a magnetic tape recording and reproducing apparatus.

It is readily appreciated that video recording and reproducing apparatus, particularly, apparatus that records and reproduces video information of broadcast quality, is highly technical and complex equipment that requires sophisticated electronic as well as mechanical components and systems. For broadcast quality recording and reproducing apparatus, particularly video tape recording and reproducing apparatus, the level of technical sophistication is extraordinary in terms of the amount of control that is required to reliably operate the apparatus at broadcast quality standards. Such videotape recording apparatus have a number of servo systems which control their operation, including a servo system which controls the reel drive motors which drive the supply and take-up reels.

## SUMMARY OF THE INVENTION

It is known from JP-A-58/158068 to provide a processor for controlling the motors for a take-up reel and a supply reel when a tape transport operates without using a capstan for the tape; the processor receives tachometer signals from the reels' motors, computes the radius of the take-up reel pack and computes for the take-up reel motor a drive signal such that the motor is supplied with torque proportional to the radius of the take-up reel pack. A drive signal computed for the supply reel motor is such as to hold the tape speed constant.

It is known from IBE International Broadcast Engineer, Volume 12, No. 176, pages 18-26 to provide a servo control system for a tape recording and/or reproducing apparatus, comprising first and second reels, a respective motor for each reel, a tape tensioning arm, a capstan which is selectively engageable with the tape, a microprocessor, and means for providing signals indicating the position of the tensioning arm, the longitudinal speed of the tape and the rotational speed and direction of the reels, the system being operable to control the motors such that in both a mode in which the capstan is engaged with the tape and a mode in which the capstan is not engaged with the tape the said first reel is operated in a position servo loop with respect to the tape tensioning arm and such that the said second reel is operated in a tape velocity servo loop during a mode in which the capstan is not engaged with the tape.

The present invention is characterised relative to the latter document in that the microprocessor is arranged to compute from the aforementioned signals relating to the tape speed and the speeds of the reels the diameters of the tape packs on the reels whereby to provide a measure of a torque required for the regulation of tape tension, to compute a drive signal controlling the motor for the first reel to maintain the said tape-tensioning arm in a predetermined range relative to a predetermined position dependent on the direction of movement of the tape and, during the said mode in which the capstan is engaged with the tape, to compute for the motor for the said second reel a drive signal in accordance with the said required torque.

Preferably the said apparatus is operable in a recording mode and a reproducing mode in each of which the capstan is normally engaged with the tape and a shuttle mode in which the capstan is not normally engaged with the tape.

The microprocessor may monitor the movement of said arm during a shuttle operation and provide control signals to the motor for the said first reel to rapidly increase or decrease the speed thereof to return the arm to a position within the predetermined range.

The servo system may include means for supplying a desired speed input signal to said microprocessor, which during a shuttle operation compares the longitudinal tape speed with the desired speed input signal to provide a drive signal to the motor for the said second reel.

## DESCRIPTION OF THE DRAWINGS

Figure 1 is a functional block diagram illustrating the functional interaction of the microprocessor with the various servo systems of the apparatus, and of the microprocessor and other important circuitry;

Figure 2 is another functional block diagram of the microprocessor and illustrates the manner in which it receives input information relating to the operation of the apparatus and provides output signals that are used to control the operation of the apparatus;

Figures 3a and 3b are very broad flow charts illustrating the software functional operation of the microprocessor;

Figure 4 is a functional block diagram of the reel servo system during operation in the record, play and variable speed reproduce modes wherein the capstan is engaged;

Figure 5 is a functional block diagram of the reel servo system as operated in the shuttle mode, during cueing and during still frame reproducing mode wherein the capstan is not engaged;

Figures 6 and 7 are timing diagrams that are useful in illustrating the operation of the reel servo system;

Figures 8a and 8b together comprise a detailed electrical schematic diagram illustrating the microprocessor together with machine control interfacing circuitry and multiplexing analog-to-digital converting circuitry; and

Figure 9 is a detailed electrical schematic diagram of the reel servo circuitry of the present invention.

## DESCRIPTION OF THE APPARATUS

Broadly stated, the reel servo system of the present invention is controlled by a microprocessor which also controls the other major servo systems of a tape recording and reproducing apparatus, the other servos of which include: 1) a scanning drum servo which rotates the transducing head at the proper speed during operations: 2) a capstan servo which controls the movement of the tape during recording and during most, but not all reproducing operations; and, 3) the automatic scan tracking servo which controls the transverse movement relative to the longitudinal direction of the track of the reproduced head to have it accurately follow a track during reproducing and particularly during reproducing for special motion effects wherein the tape is being transported at a speed other than normal playback speed. The microprocessor receives digital information as well as digitally converted analog information from various locations throughout the circuitry and apparatus, processes such information and thereafter provides digital output signals to other circuitry, some signals of which are converted into the analog domain for controlling the various operations that are performed by the apparatus in its various modes. The nature of the operation of the other servos and the circuitry that carries out the operation thereof will not be specifically described herein, but such servos are comprehensively described in European Patent Application No. 83301016.8 (EP-A- 91188) entitled "Microprocessor Controlled Multiple Servo System for a Recording and/or Reproducing Apparatus", filed on even date herewith.

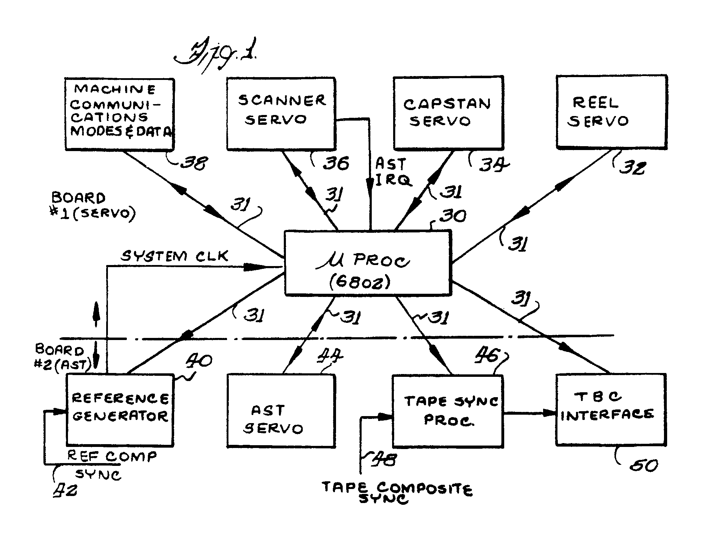

In the block diagram of Figure 1 is shown a microprocessor 30 which is interconnected by a data bus 31 with a reel servo 32, a capstan servo 34, a scanner servo 36 and a machine communication interface 38 which essentially controls the various modes of the recording and reproducing apparatus as manipulated by an operator or from a remote location. The microprocessor also interacts with a reference generator 40 which receives as an input thereto a reference station composite sync signal via line 42 and the reference generator generates system clocks which clock the microprocessor and which in turn synchronizes all of the clock timing of the servos and other circuitry. The microprocessor also interacts with the automatic scan tracking servo 44 and a tape sync processor 46 which has a tape composite sync signal input via line 48. The tape sync processor additionally provides a signal to the time base corrector interface 50 which provides appropriate timing and control signals for use by the time base corrector to provide a broadcast quality video image having the requisite stability and vertical position with respect to system reference as well as the correct chroma information, which procesesing varies depending upon what reproducing mode the apparatus is being operated.

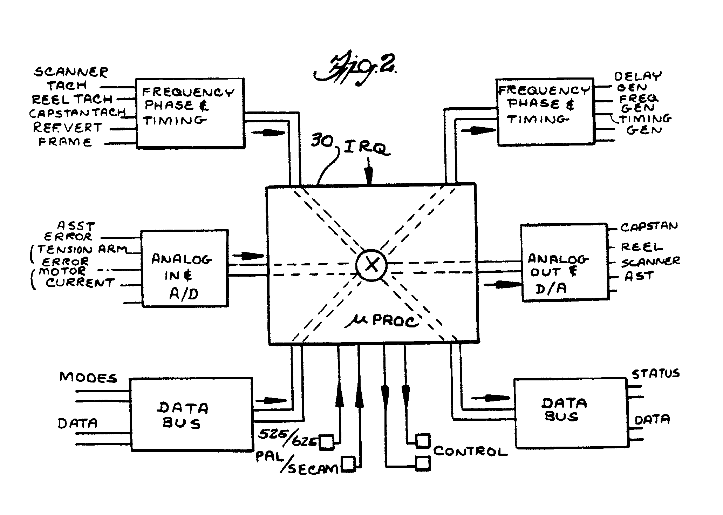

While the functional block diagrams shown in Figure 1 illustrate the interaction of the microprocessor with the various servo systems of the apparatus, with machine control and with the time base corrector and the line, the system can also be functionally described in terms of input and output signals that are provided to and from the microprocessor and this functional block diagram is shown in Figure 2. The microprocessor 30 receives frequency, phase and timing data shown by the upper left functional block including such input signals as scanner tach pulses, reel tach pulses, capstan tach pulses, reference vertical and frame timing signals, which is converted into digital information for processing by the microprocessor. The microprocessor also receives analog information shown by the block left of the microprocessor which is converted into digital information for processing by the microprocessor and such analog input signals include the automatic scan tracking error signals, the tension arm error signals and various motor currents from the reel drive motors, the capstan drive motor and the scanner drive motor. The data bus also receives operating mode information as well as other machine control data and it processes this information and provides status information and other data. The microprocessor generates digital information which is converted to analog information and these analog output signals include control signals for the capstan servo, the reel servo, the scanner servo and the automatic scan tracking servo. Similarly, the microprocessor provides frequency, phase and timing output information which include delay signals, phase and timing output information that are used by the various servos and other circuits.

The microprocessor controlled system of the present embodiment has a unique advantage in that it is adaptable for recording and reproducing video signals from any standard worldwide format, i.e., it can record and reproduce a NTSC signal having 525 lines or a PAL or SECAM signal having 625 vertical lines. The input control line can be set to operate either as a 525 or 625 line system and the various constants and other software values which control the servos and other circuitry of the apparatus will be selected for proper operation. Similarly, another control line can be set for either a PAL or SECAM format system once a 625 line system is specified. The software in memory includes instructions and numerical constants that will permit the apparatus to properly operate regardless of the television signal format that is being used.

The microprocessor controlled servo system described herein is adapted to control the reel servo system and the scanner servo system during the high speed shuttle mode in a way so as to protect the recording and reproducing heads, while the tape is being wound off one of the reels on to the other. In past practice, as the tape was nearing the end so as to be wound off on a single reel during high speed shuttle, the potential for chipping the ceramic recording and reproducing heads was quite high. In the apparatus described herein, during high speed shuttle, reel tape pack diameter information that is determined by the microprocessor is used to control the reel servo and the scanning drum servo to perform a sequence of events which substantially reduce if not eliminate the possibility of heads being chipped. When the microprocessor determines that the tape has almost reached the end of being wound off of one reel, it controls the reel servo to stop the tape and it also reverses scanner motor current to brake the scanner. After the tape has been stopped, the reel servo moves the tape at a relatively slow rate, e.g., twice normal recording speed, and the scanning drum is allowed to coast while the tape is wound entirely off one reel on to the other.

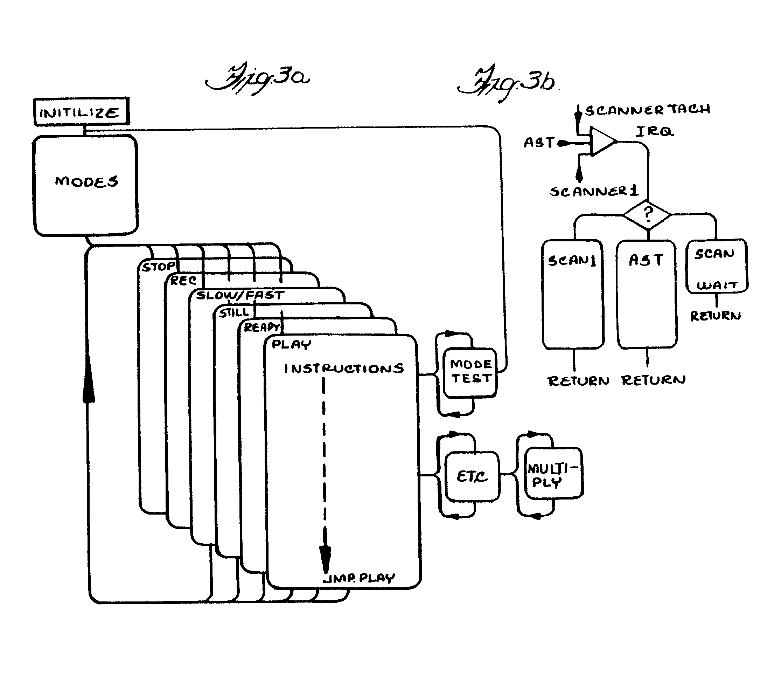

The apparatus is programmed to operate in various operating modes as is shown in the broad flow of Figure 3a. The flow chart representing microprocessor software shows that once the machine is initialized, a mode is selected and these modes include stop, record, slow and fast motion reproduce, stop motion or still frame reproduce, ready and normal play. Once the apparatus is placed in an operating mode, then it undergoes a mode test to determine if it is a valid mode and if such is the case, it will return to that mode and begin running the program that controls the apparatus in that mode. If the mode test is invalid, then it will return to the stop mode and the apparatus will stop. After the apparatus is placed in a mode, it will continue in that mode until some event occurs, such as a mode change or a completion of some operation. Included as part of each operating mode are various subroutines which are called as shown in Figure 3a. Certain ones of these subroutines are used in various ones of the operating modes. For example, the play mode will contain a block of code instructions that will call up various subroutines in the specified order. As long as the apparatus is operating in the play mode it will repetitively go through this block of code instructions. When the scanner tachometer occurs, it will cause an interrupt to the microprocessor as shown in Figure 3b.

The microprocessor operates on an interrupt basis, with an interrupt resulting from one of three inputs. The software determines which input caused the interrupt and the microprocessor then enters the appropriate block of code which runs through various subroutines until it reaches the end and then returns to the instruction that had previously been completed prior to the interrupt. The scanner tachometer pulse originally triggered a counter which has a count that exceeds the maximum time required to store all current relevant information in stack registers in the microprocessor. When this is done, it is ready to immediately perform the instructions in the scanner 1 block of code. This is carried out by the scanner interrupt block of code which causes the microprocessor to store the information and then literally wait for the scanner 1 interrupt. After the scanner 1 block of code is run, the microprocessor removes the information from the stack registers and resumes running through the instructions specified by the operating mode.

Broad Reel Servo Description

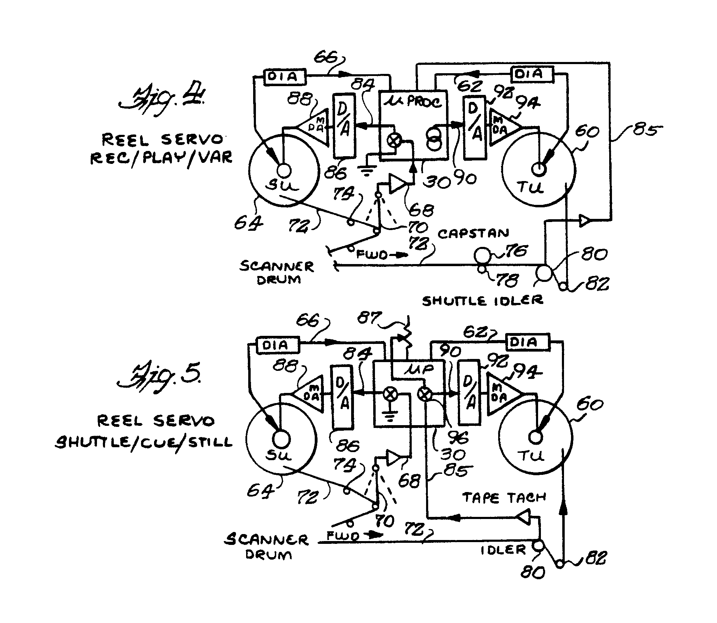

The reel servo system will now be described in conjunction with two functional block diagrams shown in Figures 4 and 5. The upper block diagram shown in Figure 4 illustrates the reel servo system in its capstan engaged mode whereas the block diagram of Figure 5 illustrates the reel servo in its capstan non-engaged mode. The capstan is engaged in the modes of record, normal play and variable speed reproducing, except still frame reproducing, and is not engaged in shuttle, cue and still frame reproducing.

While the block diagram of Figures 4 and 5 are relatively self-explanatory, the components thereof include the microprocessor 30 which receives input information such as tachometer pulses from the take-up reel 60 via line 62, tachometer pulses from the supply reel 64 via line 66 and input information via line 68 relating to the position of a tensioning arm 70 around which tape 72 is wrapped. Thus, the tape from the supply reel passes over a guide 74 and the tensioning arm 70 about the helical wrap scanning drum (not shown), past the capstan 76 which engages the tape in cooperation with a pinch roller 78 on the opposite side of the tape. The tape is then wound around an idler 80, another guide 82 and onto the take-up reel 60. The microprocessor 30 receives the tachometer input information which enables it to compute the diameter of tape pack wrapped on the supply and take-up reels, and it also receives signals that indicate the position of the tension arm 70. The microprocessor provides output signals via line 84 to a digital-to-analog converter 86 which provides an analog signal which controls a motor drive amplifier 88 that in turn controls the supply reel drive motor. In a similar manner, the microprocessor controls the take-up reel via output line 90, digital-to-analog converter 92, and motor drive amplifier 94 for driving the take-up reel motor. As is shown in Figures 4 and 5, the idler 80 has a tachometer which provides a tape tach signal on line 85 indicating the tape speed and is applied to the microprocessor 30. A potentiometer 87 (Figure 5) that is controllable by an operator also provides an input signal to the microprocessor relating to the speed of the tape during shuttling which is controlled by an operator.

When the reel servo is in a capstan engaged mode as shown in Figure 4, and the take-up reel 60 is receiving tape, the torque on the tape is controlled as a function of the size of the tape pack wrapped on the reel (the reel size) and it is controlled so that the capstan drive motor will perform a known and precise amount of work. In other words, when it is operating in the capstan engaged mode, the tension on the tape will be controlled so that the capstan drive motor is doing a precise amount of work. This will prevent the capstan drive motor from operating in a cross-over area of the motor drive amplifier. In this mode, the supply reel is controlled by a position servo loop having as its components the tension arm, the microprocessor, the digital-to-analog converter and the motor drive amplifier. During this mode, the microprocessor generates the error information, the reel tape pack diameter information, the reel speed information, the tape speed information and utilizes this information to provide the digital output signals to the digital-to-analog converter to properly control the motor drive amplifier. The microprocessor measures the tape pack diameter utilizing tachometer pulses from the reel tachometers together with tape speed information from the idler tachometer.

When the reel servo is operating in the capstan non-engaged modes during forward or reverse shuttle as well as cue and in the still frame reproducing mode, the block diagram of Figure 5 illustrates the manner in which the reel servo operates. When the reel servo is operating in the forward or reverse shuttle or cue modes, the take-up reel 60 is controlled in a velocity servo loop mode. The velocity servo loop uses the tape tachometer pulses from the idler tachometer which are indicative of the tape speed and compares them to a reference which is derived from an 8-bit number that is determined by the setting of the shuttle potentiometer control 87 in Figure 5.

As shown therein, the tape tachometer signal is applied to a comparator 96, the other input of which is supplied by the reference and provides a digital signal to the digital-to-analog converter 92 for controlling the motor drive amplifier 94 to operate the take-up reel drive motor. In this manner, the take-up reel will supply tape 72 at the speed determined by the operator, such as 150 or 300 i.p.s., for example.

The use of the velocity servo loop enables accurate control of the transport at low speeds, without the use of the capstan 76 which, as previously mentioned, is not engaged during shuttle, cueing and still frame reproducing. When the tape is being shuttled in either direction, take-up reel operation is controlled by a velocity servo loop and the supply reel operation is controlled by a position servo loop in the same manner as described with respect to Figure 4. When the tape is being shuttled in the forward direction, the tension arm reference is moved to the right which actually decreases the tension in the tape, such that the take-up reel will pack or wind tape thereon with a nominal predetermined tension. When the tape is being shuttled in the reverse direction, the tension arm is moved to the left to increase the tape tension. This has the effect of overcoming friction of the transport and results in tape being wound on to the supply reel with a nominal predetermined tension. In this manner, the frictional load is maintained in the velocity loop and the supply reel is controlled as a function of the tension in the tension arm. It should be appreciated that while the dynamic characteristics in the forward direction are quite different from the dynamic characteristics in the reverse direction, the switching of the position loop tension arm reference from side-to-side causes the dynamic characteristics of forward and reverse to be comparable to one another.

A potential problem is introduced if the tape is moved in the reverse direction. This can be appreciated by the example of the take-up reel feeding tape into the tension arm and wherein a significant amount of friction is present so that the tape sticks in the transport and is not supplied to the tension arm. Stated in other words, if the take-up reel pushes tape toward the idler fast enough to put slack in the tape (sometimes referred to as "throwing a loop"), then it will lose contact with the idler and accurate cueing will not be possible, since the idler tachometer counter provides such information relating to tape movement.

To overcome the potential problem of throwing a loop in the tape which would detrimentally affect the cueing operation due to loss of contact by the idler 80 and therefore the tape tachometer counter, the tension arm 70 is repositioned to the left to increase the tension in the tape between the tension arm and the take-up reel 60 to thereby overcome the friction in the transport including friction caused by the scanner, the guides, the idler arm and the like. To increase the tension, the microprocessor merely moves the tension arm to the left to increase the tension on the tape and after the tension arm is moved to its new position, then the take-up reel will begin to supply or push tape toward the idler and the increased tension caused by the tension arm will prevent any slack occurring in the tape path.

The reel servo also has an acceleration loop control provided by the microprocessor to ensure that during shuttle, the tape is not being moved too rapidly for either the take-up or supply reel. Thus, after the tension arm is appropriately located to provide the proper tape tension for packing the tape onto one of the reels as previously described, limits of tension arm movement are set (which are preferably different for each direction of tape movement) and as the tape is accelerated to its shuttle speed, any movement of the arm beyond one of the limits causes the take-up reel speed to be changed to return the arm to a position within the prescribed limits.

Another mode that is programmed into the reel servo is a threading mode which is carried out before any active operational mode is performed. The microprocessor essentially determines if the transport has been operated after it had been threaded. If a tape is placed on the apparatus and is not manipulated to remove the slack in it, then if it is placed into one of the active operating modes, it could be possible to snap the tape taut and stretch it, or violently move the tension arm or the like, which could damage the tape and/or the transport components. Thus, the threading mode is effective to slowly wind the supply and take-up reels relative to one another so as to bring the tape to a proper tension level and effectively slowly and carefully remove any slack in the tape and this is done by the microprocessor through programmed control. Essentially, the program includes an instruction which asks if the tape had previously been threaded before an active operation is commenced and if it had not, then it slowly drives the reel motors to remove the slack in the tape by measuring the position of the tension arm and as the tape is brought to its proper tension level, the tension arm will be moved into a positional range that is appropriate for the particular operation that will be accomplished. When it reaches its nominal range, then the program control permits the active operation to commence.

The Microprocessor Circuitry

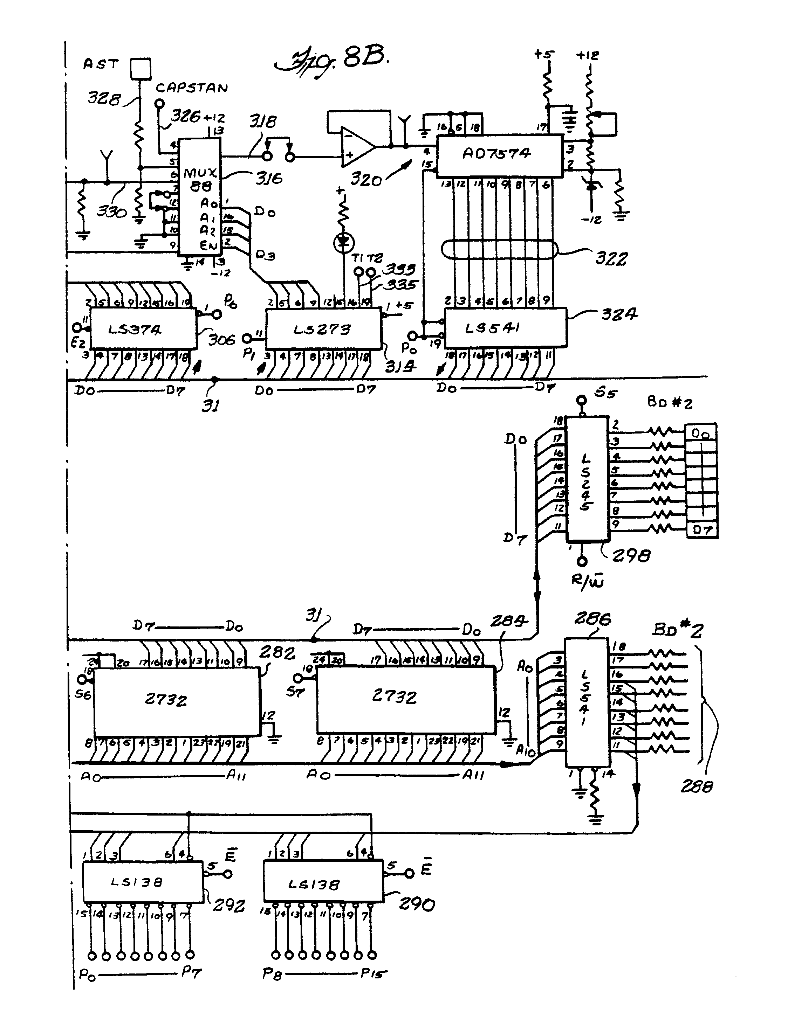

Before describing the detailed electrical circuit schematic diagrams of the various servos that have been previously described with respect to functional block diagrams, the schematic diagrams which contain the microprocessor 30 itself will be briefly described in connection with Figures 8a and 8b which together comprise a single schematic. As previously mentioned, and as has been shown by the block diagram of Figure 1, the bulk of the circuitry of the apparatus described herein is contained on only two printed circuit boards and one of said printed circuit boards contains the microprocessor itself. The layout of the circuitry is such that address control of bidirectional buffers enable the data bus from the microprocessor to be connected to either the first or the second printed circuit board. As shown in Figure 8a, the microprocessor 30, which is a Motorola integrated circuit Model MC 6802 has 16 address lines which address circuit components as well as specific addresses of memory circuits. As shown on the lower portion of the microprocessor 30 in Figure 8a, address lines $A_0$ through $A_{15}$ extend rightwardly to a random access memory 2280 which is controlled by address lines $A_0$ through $A_7$, as well as respective programmable read only memories 282 and 284 (Figure 8b) which are controlled by address lines $A_0$ through $A_{11}$. The address lines also extend to a buffer 286 which has output lines indicated generally at 288 which extend to the second printed circuit board address lines. The lines 288 also extend downwardly to respective decoder integrated circuits 290 and 292 which are used to select ports $P_0$ through $P_{15}$. the address lines also extend to yet another decoder 294 which provides selection of various programmable timer integrated circuits $T_A$ through $T_H$.

Decoders 290, 292 and 294 are enabled when a master decode enable line $S_4$ is active and this is provided by a master decode circuit 296 located to the left of the decoder 294. As is clearly illustrated, address lines $A_{12}$, $A_{13}$ and $A_{14}$ from the microprocessor 30 control the address selection master decode enable output lines $S_0$ through $S_7$ that activate various portions of the circuitry. For example, when active, the decoded outout line $S_0$ enables the random access memory 280, decode output $S_6$ enables the memory 282 and decode output $S_7$ similarly enables memory 284. The data bus 31 from the microprocessor comprises eight output lines $D_0$ through $D_7$ extending to the memories 280, 282, 284 as well as to bidirectional buffers 298 and 300. Buffer 290 has output lines that extend the data bus to the second printed circuit board, and it is activated by the decode output $S_5$. Activation of the decode output $S_4$ enables the decoders 290, 292 and 294 as well as the other bidirectional buffer 300 which effectively extends the data bus to the remaining circuitry shown in the upper portion of Figures 8a and 8b and to remaining circuitry on board No. 1.

As shown in Figure 8a, the data bus 31 has input latches 302 and 304 connected thereto and an output latch 306 being shown in Figure 8b. The data lines 308 are also connected to these latches and the lines 308 represent a data bus to the machine control system which has a separate microprocessor controlled system for carrying out other machine control functions of the apparatus independently of the system controlled by microprocessor 30. The interaction of operator control and mode switches, diagnostics and the like with the servo system of the present invention is carried out through this data bus via the latches 302, 304 and 306. These latches are respectively enabled by enable lines $E_0$, $E_1$ and $E_2$ which are decoded outputs of a decoder circuit 310 that has operator activated address lines $A_0$ through $A_3$ from the machine control system. The decode circuit 310 is enabled by a line 312 from the machine control system. By selectively enabling decode output lines $E_0$, $E_1$ and $E_2$, data can be input into the latches 302 and 304 for communication onto the bata bus of the microprocessor 30 and enabling the latch 306 permits data from the microprocessor 30 to be latched therein for communication to the machine control system via lines 308.

The remaining portion of the circuitry shown in the upper portion of Figures 8a and 8b concern the analog information input that is provided to the microprocessor 30. When port $P_1$ from decoder 292 is active, a latch 314 that is connected to the data bus can receive a data word which decodes an address for controlling a multiplexing switch 316. The switch 316 selects one of the left inputs thereof for application onto line 318 that extends to an analog-to-digital converter, indicated generally at 320, having output lines 322 which extend to a latch 324 which applies data onto the data bus for use by the microprocessor when a port line $P_0$ is enabled from the address decoder 292.

The multiplexing switch 316 can select a capstan servo control track error signal applied via line 326, an automatic scan tracking movable element position error signal applied via line 328 or a signal that is indicative of the position of the tension arm 70 applied via line 330. The circuitry at the upper portion of Figure 8a provides an analog signal on line 330 that represents the position of the previously described arm through appropriate loop compensation circuitry indicated generally at 331. The arm positional reference for forward and reverse arm locations during shuttle and still frame reproducing is set by coding lines 333 and 335 by means of the output latch 314 from the microprocessor. In addition, line 337 can be selected to measure the actual mechanical arm position for tape threading and unthreading.

## The Reel Servo Circuitry

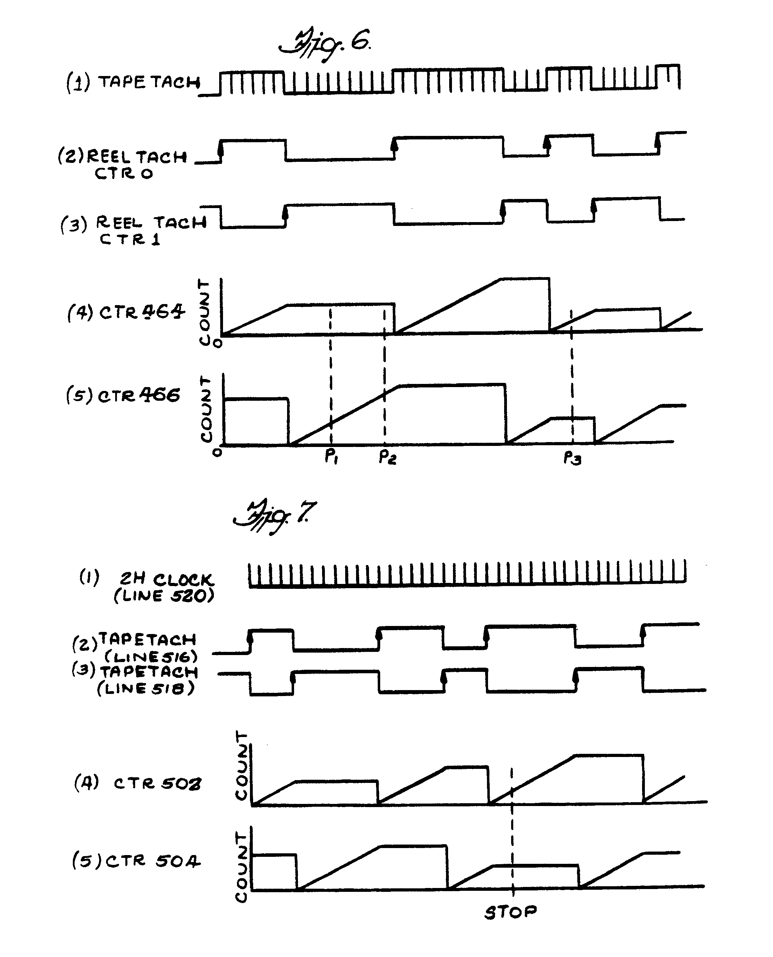

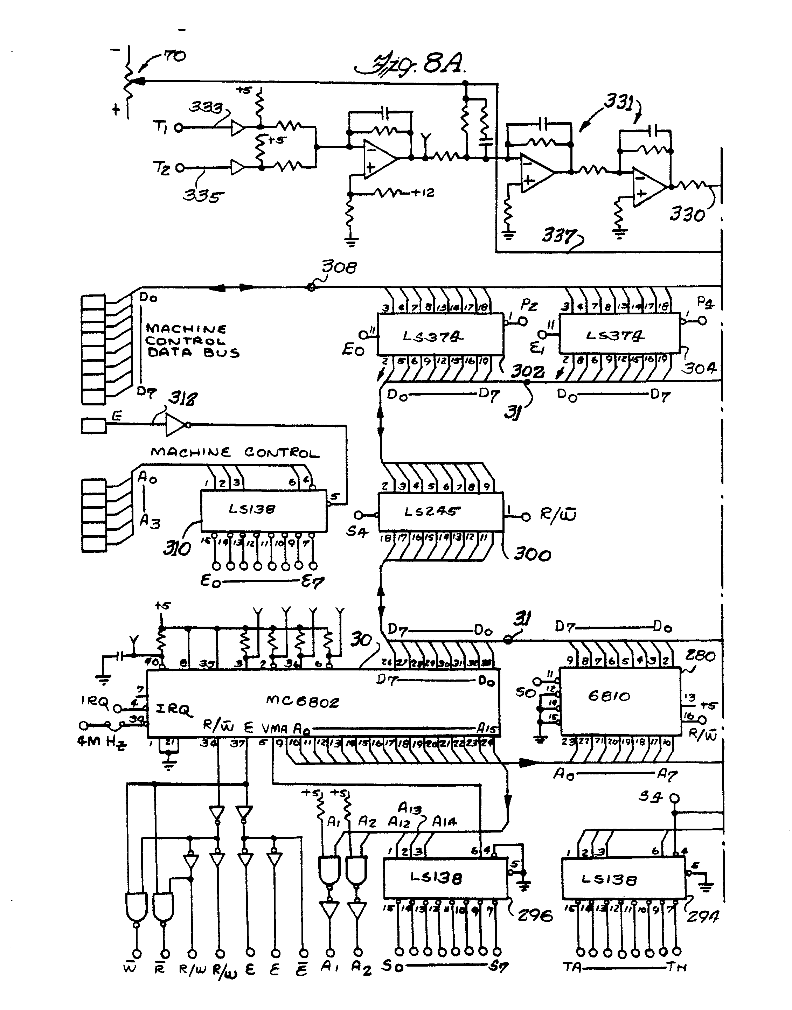

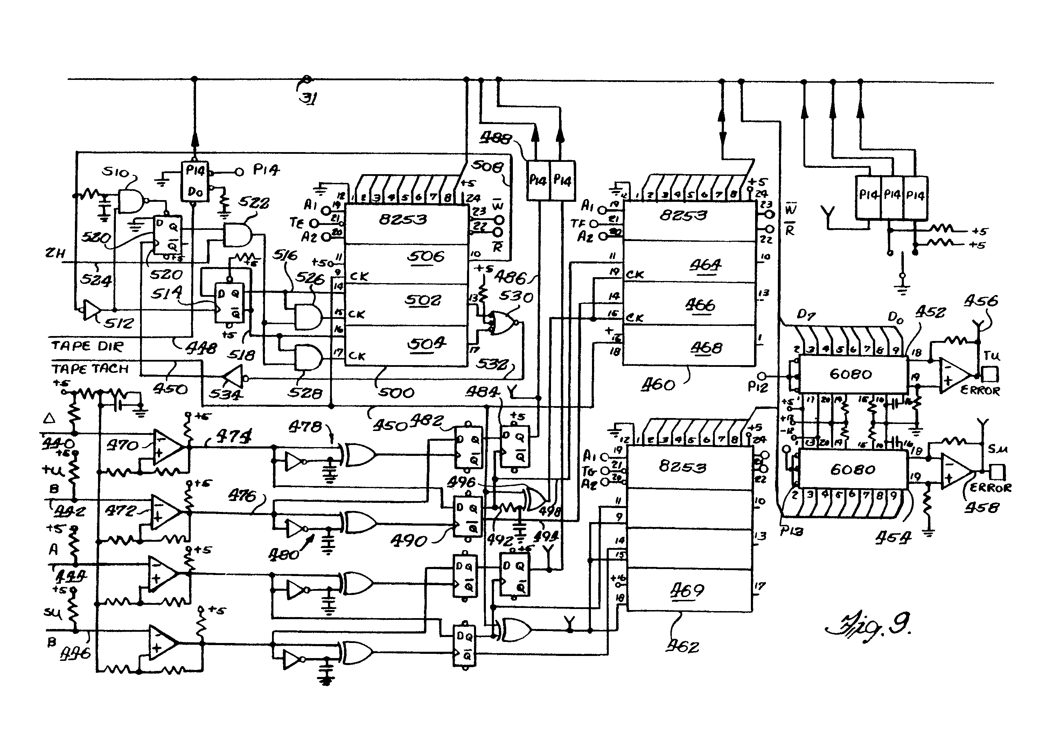

The reel servo system that has been previously described with respect to the block diagrams of Figures 4 and 5 is largely controlled by the microprocessor 30 together with the specific circuitry shown in Figure 9 together with the timing diagrams of Figures 6 and 7. Turning to the circuitry of Figure 9, it is shown to be interconnected to the main data bus 31 via various lines and has inputs comprised of take-up reel tachometer information via lines 440 and 442, supply reel tachometer information via lines 444 and 446 as well as tape direction information from line 448 and tape tachometer information via line 450. The output signals from the microprocessor 30 are directed through the data bus 31 to digital-to-analog converters 452 and 454 which provide output drive signals to the take-up reel motor drive amplifier via line 456 and to the supply reel motor drive amplifier via line 458. As previously mentioned, the diameter of the tape packed on each reel is measured by the reel servo circuitry for the purpose of programming the torque that will be required on the reels during various operating modes. More specifically, by knowing the diameter of tape pack on the take-up reel 60 and supply reel 64, torque can be programmed so that the tension on the tape is maintained in a proper range during the various modes. It is desirable to maintain the appropriate torque so that tension is maintained at proper levels during operation. The reel tape pack diameter information is also useful in monitoring the operation of the system and if the measured reel diameter is greater than a maximum known actual value, then the microprocessor knows that something is wrong in the system. Moreover, as tape is being wound on or off one of the reels, it is known through the diameter values that it is approaching the end so that the microprocessor can slow down the reel speeds to prevent tape from flying off the reel.

The reel servo system not only is capable of measuring the diameter of tape pack on both of the take-up and supply reels, it also instantaneously determines the direction that the reels are rotating. The servo system also has information relating to the tape speed and direction and uses the tape period information for use in the automatic scan tracking servo system, particularly to assist in determining whether a track jump is to occur at the next opportunity.

Returning to the aspect of determining the tape pack diameter on the take-up and supply reels, a counter chip 460 is adapted to acquire information for determining the take-up reel tape pack diameter and a second integrated circuit counter chip 462 is adapted to supply comparable information for the supply reel. These circuits are identical and have 8-bit bidirectional data lines interconnected to the data bus 31 for communicating with the microprocessor. The counter chip 460 has two counters 464 and 466 which alternately accumulate a count of tachometer pulses from processed tape tachometer and a third counter 468 accumulates tape tachometer pulses directly from the idler 80 and therefore provides an indication of the tape speed. Since any one of the counters in the chip 460 circuit can be addressed through address lines $A_1$ and $A_2$ when enabled by the TF enable line, the microprocessor has access to the tape speed count from the counter 468 circuit and therefore the count is not needed for the same purpose in the other integrated circuit chip 462 which has comparable information relating to the supply reel. However, a counter 469 is used with the microprocessor 30 to determine supply reel speed during a tape threading operation. The counters 464 and 466 alternately accumulate a tape tachometer count which clocks the counters when they are enabled and they accumulate counts for a period corresponding to the reel tachometer period. Thus, during each rotation of the take-up reel, there will be a tape tachometer count accumulated in the counters 464 and 466 in a unique manner which will be described in connection with the timing diagrams of Figure 6. When one counter is accumulating counts, the other effectively stores the previously accumulated count and whenever a positive-going transition occurs as a result of a tachometer pulse being produced due to rotation of the take-up reel, the counter that had been counting will be stopped and the other counter initiated. The two counters alternate their operation in this manner so that one of the counters always contains a count value that is indicative of the reel speed relative to the tape speed, thereby providing the diameter of tape pack on the reel.

The circuitry which controls the counters in Figure 9 includes input take-up reel tachometer signals on lines 440 and 442 which are 90 degrees apart, with the inputs being applied to respective comparators 470 and 472 having respective output lines 474 and 476 which extend to respective multiply-by-two circuits 478 and 480, each of which is comprised of an EXCLUSIVE OR gate, and inverter and capacitor which operate to provide an output pulse at the EXCLUSIVE OR gate output for each edge or transition that is produced by the associated comparator. The output of the EXCLUSIVE OR for multiplier 178 triggers a D-latch 482 which has its Q output extending to the D input of another latch 484 which provides a direction value on line 486 that extends to a buffer 488 which provides a signal onto the data bus 31. The level of the line indicates the direction that the take-up reel is rotating. The output of the multiply-by-two 480 clocks another D-latch 490 which has its D input provided by line 474 and the Q output on line 492 and the Q output on line 494 of the second latch 490 provide signals for enabling either the counters 464 or 466. The Q output line 492 is also applied to an EXCLUSIVE OR gate 496 which has one input provided by the tape tachometer pulse signal on line 450. The output of the EXCLUSIVE OR 496 produces a clock signal on line 498 for clocking both counters and it clocks the enabled one at a rate corresponding to the rate of the tape tachometer signal. The use of the EXCLUSIVE OR gate 496 overcomes a problem that would arise as a result of the tape being stuck and the reels continuing to move. If the tape is stuck, there will not be a tape tachometer pulse received and then the counters 464 and 466 will not be accurate. Since the next clock pulse clears and starts the other counter, if no tape tachometer pulse is generasted then the circuit operation will fail. To overcome this problem the EXCLUSIVE OR gate 496 provides a clock edge that will validate the counters in the absence of a tape tachometer pulse. The reel tachometer will provide a single clock pulse to one of the counters that will result in the counter accumulating a count of one and this is detected by the microprocessor as being an invalid condition that indicates the reels are still turning while the tape is stopped. The microprocessor then shuts down the reel motors as is described.

The operation of the above circuitry can be more clearly understood by referring to Figure 6. Figure 6(1) represents an exaggerated illustration of the processed tape tachometer pulses that are received by the counters 464 and 466. Figures 6-(2) and 6(3) illustrate the input signals on lines 498 and 494 to the two counters 464 and 466, respectively, it being appreciated that the illustration of Figure 6(2) is the inverse of Figure 6(3). Whenever a positive-going transition appears on either of the input lines 498 and 494, the counter receiving the positive-going edge will be reset and will begin accumulating count as shown in Figures 6(4) and 6(5). When a subsequent positive-going transition on the other counter input occurs, the first counter is stopped and the second counter will be cleared and begin accumulating count. The illustration of Figure 6(2) shows a varying duration period which is shown to be exaggerated to illustrate a pronounced change in the reel tape pack diameter. The longer the duration of a level, the larger the reel tape pack size and conversely, if a very narrow or short duration level occurs, it is an indication that the reel tape pack size is smaller and would therefore accumulate a lesser count in the active counter.

If the microprocessor 30 interrogates the counters 466 and 464, it will obtain a value from both counters and it is programmed to utilize the higher count of the two. Thus, if the interrogation occurs at the point in the time $P_1$, the counter 464 contains a higher count than counter 466 and the microprocessor will utilize the higher count of the counter 464 in performing its calculations. However, if the interrogation occurs at the point in time $P_2$, then counter 466 will have a larger accumulated count and it will use this value. It should be appreciated that if the reel tape diameter is increasing, such as would be the case for the point $P_2$, the most accurate value from counter 466 would indeed indicate that it is increasing and this information is virtually instantaneously available. Conversely, if the reel tape pack diameter is decreasing, as would occur at point in time $P_3$, the counters would be enabled and zeroed more rapidly so that the value at $P_3$ would be available very quickly, as shown in Figures 6(2) and 6(3). therefore, by using the higher valued counter of the two counters, the microprocessor has available to it the pertinent information relating to reel tape pack diameter at any particular time. It should be appreciated that the circuitry for the supply reel is identical to that of the take-up reel so that the diameter of the tape on the supply reel can also be calculated at any time.

The diameter numbers that are obtained are integrated by the microprocessor to have a stable average value of the diameter of tape wrap.

, Figure 9 also contains circuitry which measures the tape period, i.e., the inverse of the tape speed and the tape period information is used by the microprocessor primarily for predicting the ramp slope and whether a track jump operation should be accomplished at the appropriate time during each revolution of the transducing head. For this reason, the tape period circuitry is primarily used for the automatic scan tracking system, but since it utilizes the tape tachometer information for providing a clock time period it is conveniently located in the area of the circuitry which contains the reel servo circuitry.

The value of the tape period is determined in a manner very similar to that described with respect to the take-up reel tape pack diameter measurement and in this regard, the circuitry includes a counter integrated circuit chip 500 which includes two programmable counters 502 and 504 which alternately accumulate a 2H rate count via line 524 during a period of tape movement that is a function of the tape tachometer pulses on line 450. Thus, a tape tachometer signal on input line 450 is applied to the clock input of a counter 506 which is programmed to act as a divider and which divides the tachometer rate for a NTSC signal by five which output signal appears on line 508 that extends to a NAND gate 510 and to an inverter 512, the output of the inverter of which clocks a D flip-flop 514 configured as a divide-by-two having Q and $\overline{Q}$ outputs which are applied to the inputs of the counters 502 and 504 by respective lines 516 and 518. The NAND gate 510 controls a D-latch 520 and sets the same so that its Q output enables an AND gate 522 which has as its other input the clock signal on line 524 which is at a 2H rate which clocks the counters through respective AND gates 526 and 528

During operation, the 2H clock pulses clock the appropriately enabled counter 502 or 504. Referring to Figure 7(1), the 2H clock is shown to be exaggerated to illustrate fewer than actual number of pulses that occur. The waveform of Figure 7(3) is the complement of that shown in Figure 7(2). If the tape is moving rapidly, then the period of the signals in Figures 7(2) and 7(3) will be shorter than when the tape is moving more slowly. Thus, the waveforms shown in Figures 7(2) and 7(3) are exaggerated to illustrate varying rates of speed of the tape for purposes of illustration. the occurrence of a positive-going edge in either of the waveforms of Figures 7(2) or 7(3) will cause the appropriate counter to be reset and begin counting the number of 2H clock pulses that occur until the other counter receives an enabling positive-going edge. This causes the other counter to be reset and begin counting, and simultaneously stops the count of the previously counting counter. As is illustrated from Figures 7(4) and 7(5), when the tape is moving more slowly, the active counter will accumulate a larger count than when the tape is moving more rapidly.

As was the case with respect to the take-up and supply reel counters, when the microprocessor interrogates the counters 502 and 504 to determine the tape period, it will take the larger of the two counts as the accurate value. The benefit of having both counters available for the microprocessor is that they provide accurate and instantaneous information relating to the tape period. By using two counters, the larger count will be reasonably accurate and the value is immediately available for use by the microprocessor during operation.

It is also essential that the microprocessor knows when the tape has in fact stopped. The count increases as the tape slows and if the tape is stopped, then the count will eventually reach the terminal count of the counter and will roll over and begin anew. Since this would provide a count that would be incorrect, provision is made for preventing this from occurring and this is accomplished by a gate 530 having input lines provided by the output of counters 502 and 504. When either of the counters reaches terminal count, it will provide an output signal on one input of the gate 530 which in turn will provide a low output on line 532 that extends to the clock input of the D flip-flop 520 via inverter 534. The clocking of the D flip-flop 520 causes its Q output to go low and disable gate 522 which blocks the 2H frequency clock so that the counters 502 and 504 will no longer count. Since this occurs at the terminal count of the counters, the microprocessor known by virtue of a terminal count being received upon interrogation, that in fact the tape has stopped. Once the tape moves again so that a tape tachometer pulse occurs, the signal will be applied through counter 506 to one input of gate 510 which will set the flip-flop 520 causing its Q output to go low and enable gate 522 to resume clocking of the counters 502 or 504.

From the foregoing detailed description it should be appreciated that an improved reel servo has been shown and described which has many desirable functional capabilities that are not found in prior art apparatus. Since the present invention is microprocessor controlled, the take-up and supply reels can be operated under different types of closed servo loop control during different operating modes, which greatly improves its overall operation. More specifically, it enables shuttling, cueing and still frame reproduction to be performed without the use of a capstan, which permits a less sophisticated and expensive capstan assembly to be used than would otherwise be possible. The unique use of circuitry enables the diameter of the tape wrapped on each of the supply and take-up reels to be instantaneously available for use by the microprocessor in controlling not only the reel servo, but other servos during particular operating during particular modes.

## Claims

1. A servo control system for a tape recording and/or reproducing apparatus, comprising first (64) and second (60) reels, a respective motor for each reel, a tape tensioning arm (70), a capstan (76) which is selectively engageable with the tape, a microprocessor (30), and means for providing signals indicating the position of the tensioning arm, the longitudinal speed of the tape and the rotational speed and direction of the reels, the system being operable to control the motors such that in both a mode in which the capstan is engaged with the tape and a mode in which the capstan is not engaged with the tape the said first reel (64) is operated in a position servo loop with respect to the tape tensioning arm and such that the said second reel is operated in a tape-velocity servo loop during a mode in which the capstan is not engaged with the tape;

characterised in that the microprocessor (30) is arranged to compute from the aforementioned signals relating to the tape speed and the speeds of the reels the diameters of the tape packs on the reels whereby to provide a measure of a torque required for the regulation of tape tension, to compute a drive signal controlling the first reel to maintain the said tape-tensioning arm (70) in a predetermined range relative to a predetermined position dependent on the direction of movement of the tape and, during the said mode in which the capstan is engaged with the tape, to compute for the motor for the said second reel a drive signal in accordance with the said required torque.

2. A servo system according to claim 1 in which the said apparatus is operable in a recording mode and a reproducing mode in each of which the capstan is normally engaged with the tape and a shuttle mode in which the capstan is not normally engaged with the tape.

3. A servo system according to claim 1 or 2 wherein said microprocessor (30) monitors the movement of said arm (70) during a shuttle operation and provides control signals to the motor for the said first reel to rapidly increase or decrease the speed thereof to return the arm to a position within the respective predetermined range.

4. A servo system according to any foregoing claim, including means (87) for supplying a desired speed input signal to said microprocessor, which during a shuttle operation compares the longitudinal tape speed with the desired speed input signal to provide a drive signal to the motor for the said second reel.

## Revendications

1. Système d'asservissement pour un appareil d'enregistrement et/ou de reproduction à bande, comprenant une première (64) et une seconde (60) bobines, un moteur respectif pour chaque bobine, un bras de tension de bande (70), un cabestan (76) qui est susceptible d'être amené en contact de manière sélective avec la bande, un microprocesseur (30), et des moyens pour fournir des signaux indiquant la position du bras de tension, la vitesse longitudinale de la bande et le sens de rotation des bobines, le système pouvant être mis en oeuvre pour commander les moteurs de manière à ce que dans les deux modes où le cabestan est en contact avec la bande et où le cabestan n'est pas en contact avec la bande, ladite première bobine (64) est mise en oeuvre dans une boucle d'asservissement de position par rapport au bras de tension de bande et de manière à ce que ladite seconde bobine est mise en oeuvre dans une boucle d'asservissement de vitesse de bande pendant un mode où le cabestan n'est pas en contact avec la bande;

caractérisé en ce que le microprocesseur (30) est disposé pour calculer à partir des signaux mentionnés ci-dessus se rapportant à la vitesse de la bande et aux vitesses des bobines et aux diamètres des galettes de bande sur les bobines pour fournir par ce moyen une mesure d'un couple nécessaire pour la régulation de la tension de bande, pour calculer un signal de commande pilotant le moteur pour que la première bobine maintienne ledit bras de tension de bande (70) dans un domaine prédéterminé par rapport à une position prédéterminée dépendant du sens de déplacement de la bande et, pendant ledit mode dans lequel le cabestan est en contact avec la bande, pour calculer pour le moteur de ladite seconde bobine un signal de commande en fonction dudit couple nécessaire.

2. Un asservissement selon la revendication 1 dans lequel ledit appareil peut être mis en oeuvre dans un mode d'enregistrement et dans un mode de reproduction dans chacun desquels le cabestan est normalement en contact avec la bande et dans un mode de transfert rapide dans lequel le cabestan n'est normalement pas en contact avec la bande.

3. Un asservissement selon la revendication 1 ou 2 dans lequel ledit microprocesseur (30) peut piloter le déplacement dudit bras (70) pendant une mise en oeuvre dans le mode de transfert rapide et fournir des signaux de commande pour le moteur pour que ladite première bobine augmente rapidement ou diminue rapidement sa vitesse pour ramener le bras à une position à l'intérieur du domaine prédéterminé.

4. Un asservissement selon l'une quelconque des revendications précédentes comprenant des moyens (87) pour délivrer un signal d'entrée de vitesse souhaitée dans ledit microprocesseur, qui pendant une mise en oeuvre dans le mode de transfert rapide compare la vitesse longitudinale de bande avec le signal d'entrée de vitesse souhaitée pour fournir un signal de commande au moteur pour ladite seconde bobine.

**Patentansprüche**

1. Servoregelsystem für ein Wand-Aufzeichnungs- und/oder Wiedergabegerät mit einer ersten und zweiten Spule (64 bzw. 60), jeweils einem den Spulen zugeordneten Motor, einem Wandspannungsarm (70), einem selektiv mit dem Band in Wirkverbindung bringbaren Bandantrieb (76), einem Mikroprozessor (30) und einer Anordnung zur Erzeugung von die Stellung des Spannungsarms, die Längsgeschwindigkeit des Bandes und die Drehzahl und die Drehrichtung der Spulen anzeigenden Signalen, wobei die Motoren derart regelbar sind, daß sowohl in einem Betrieb, bei dem der Bandantrieb mit dem Band in Wirkverbindung steht, und in einem Betrieb, in dem der Bandantrieb nicht mit dem Band in Wirkverbindung steht, die erste Spule (64) in einer Stellungsservoschleife in Bezug auf den Bandspannungsarm betrieben wird, und weiterhin derart, daß die zweite Spule während eines Betriebs, in dem der Bandantrieb nicht mit dem Band in Wirkverbindung steht, in einer Bandgeschwindigkeits-Servoschleife betrieben wird,

dadurch **gekennzeichnet,** daß der Mikroprozessor (30) aus den sich auf die Bandgeschwindigkeit und die Drehzahlen der Spulen die Durchmesser der Bandwickel auf den Spulen berechnet, wodurch ein Maß für das zur Regelung der Bandspannung notwendige Drehmoment gewonnen wird, um ein die erste Spule regelndes Antriebssignal zu berechnen, wodurch der Bandspannungsarm (70) in Abhängigkeit von der Bewegungsrichtung des Bandes relativ zu einer vorgegebenen Stellung in einem vorgegebenen Bereich gehalten wird, und um im Betrieb, in dem der Bandantrieb nicht mit dem Band in Wirkverbindung steht, für den Motor für die zweite Spule ein Antriebssignal als Funktion des geforderten Drehmomentes zu berechnen.

2. Servosystem nach Anspruch 1, bei dem das Gerät in einem Aufzeichnungsbetrieb und einem Wiedergabebetrieb, in denen der Bandantrieb normalerweise mit dem Band in Wirkverbindung steht, sowie in einem Hin- und Rücklaufbetrieb, in dem der Bandantrieb normalerweise nicht mit dem Band in Wirkverbindung steht, betreibbar ist.

3. Servosystem nach Anspruch 1 oder 2, bei dem der Mikroprozessor (30) die Bewegung des Arms (70) während des Hin- und Rücklaufbetriebs überwacht und Regelsignale für den Motor für die erste Spule erzeugt, um deren Drehzahl zur Rückführung des Arms in eine Stellung innerhalb des entsprechenden vorgegebenen Bereiches schnell zu erhöhen oder zu verringern.

4. Servosystem nach den vorhergehenden Ansprüchen mit einer Anordnung (87) zur Erzeugung eines gewünschten Geschwindigkeitseingangssignals für den Mikroprozessor, welcher die Bandlängsgeschwindigkeit während des Hin- und Rücklaufs mit dem gewünschten Geschwindigkeitseingangssignals vergleicht, um ein Antriebssignal für den Motor für die zweite Spule zu erzeugen.

EP 0 236 588 B1

Fig. 1.

MACHINE COMMUNI-CATIONS MODES & DATA — 38

SCANNER SERVO — 36

CAPSTAN SERVO — 34

REEL SERVO — 32

BOARD #1 (SERVO)

SYSTEM CLK

μ PROC (6802)

AST IRQ

31 — 30

BOARD #2 (AST)

REFERENCE GENERATOR — 40

AST SERVO — 44

TAPE SYNC PROC. — 46

TBC INTERFACE — 50

REF COMP SYNC — 42

TAPE COMPOSITE SYNC — 48

13

Fig. 2.

Fig.3b.

Fig.3a.

Fig. 4.

REEL SERVO
REC/PLAY/VAR

Fig. 5.

REEL SERVO
SHUTTLE/CUE/STILL

16

*Fig. 6.*

(1) TAPE TACH

(2) REEL TACH
CTR 0

(3) REEL TACH
CTR 1

(4) CTR 464

(5) CTR 466

$P_1$   $P_2$   $P_3$

*Fig. 7.*

(1) 2H CLOCK
(LINE 520)

(2) TAPE TACH
(LINE 516)

(3) TAPE TACH
(LINE 518)

(4) CTR 502

(5) CTR 504

STOP

17

Fig. 8A.

EP 0 236 588 B1

Fig. 8B.

Fig. 9.

EP 0 236 588 B1